# EUROPEAN PATENT SPECIFICATION

(11) **EP 1 323 602 B1**
(45) Date of publication and mention of the grant of the patent: **17.10.2007**
(21) Application number: 01500295.9
(22) Date of filing: 27.12.2001
(51) Int. Cl.: B60T 7/06

(54) **Vehicle control pedal**
Fahrzeugsteuerpedal
Pédale de commande d'un véhicule

(43) Date of publication of application: 02.07.2003
(73) Proprietor: Autotech Engineering, A.I.E., 48220 Abadino (Vizcaya) (ES)
(72) Inventor: Alapont Etxániz,Inaki Joseba c/o Gestamp Bizkaia,S.A., 48220 Abadino (Vizcaya) (ES)
(74) Representative: Carpintero Lopez, Francisco

(56) References cited:
- EP-A- 1 038 742
- GB-A- 2 356 443
- US-A- 5 916 330
- US-A1- 2001 006 010

## Description

### OBJECT OF THE INVENTION

The present invention refers to a vehicle control pedal, indifferently to a brake pedal or a clutch pedal, which has been designed and structured in order to improve the safeness of the vehicle regarding the driver, specifically in order to avoid that said pedal become, as is habitual, an element which impacts against the user's legs in the event of a possible accident by head-on collision.

The object of the invention is to achieve that on a supposition like that just mentioned, that is to say in the event of a head-on collision of the vehicle, the pedal is retracted toward the area of the engine, increasing considerably the degree of deformation of the vehicle for said pedal to be capable of impacting against the driver's legs. A pedal corresponding to the state of the art is described in US 2001/0006010 A1.

The invention is applicable to the field of self-propelled vehicles and especially to the motor car sector.

### BACKGROUND OF THE INVENTION

As is known, any motor car has pedals for the control thereof, mounted pivotally on a support and which through respective connecting cables or the like acts on the pertinent element, either the brake system or the clutch.

These pedals, fitted with a rigid arm terminated in a foot rest or pedal properly stated, project toward the driver, though with a slight downward inclination, so that in the event of a head-on collision of the vehicle, with serious deformation thereof, the pedals are displaced toward the driver, being capable of having on the latter two types of effect, a sharp blow to the legs, of unforeseeable outcome, with possible fractures, when the driver has his feet simply resting on the floor of the vehicle, immediately in front of the pedals, in the moment of the accident, or a sudden transmission of the effect of the impact to one of his legs, also of unforeseeable outcome, when the accident takes place in a situation of resting or acting on the pedal.

### DESCRIPTION OF THE INVENTION

The pedal that the invention proposes resolves in a fully satisfactory manner the problem outlined above in as much that, in the event of a collision with deformation of the body of the vehicle in the area where the pedal is installed, a tilting thereof takes place, with the consequent retraction or distancing with respect to the driver, which makes impact practically impossible against the legs of the latter, no matter how serious the deformation of said vehicle may be as a result of the accident.

To this end and in a more specific way the pedal itself is constituted by means of two pieces joined to each other in an articulated manner and so that such pieces are capable of being overlapped substantially upon each other, the first piece, the bearer of the footrest, incorporating at its other end, a notch in which can be fitted a pin for engagement with the second piece, at a point of this latter substantially removed from the hinge with the former, pin which has in turn, the possibility of transversal displacement, in a groove or ripped hole of said second piece, so that such pin is kept permanently in association with the second piece, whilst being capable of being coupled or not in the notch of the former.

On the second piece, which is the one that is fastened to the support of the pedal as a whole, a rocker arm is mounted with the possibility of pivoting, said arm being terminated at one of its ends in a fork coupled to the pin mentioned and capable of displacing the latter along the mentioned groove, rocker arm which at its other end is opposite a cam which, in the event of a supposed deformation of this area of the vehicle, strikes against a stop that causes it to pivot, said cam making the rocker arm pivot in turn and the latter displacing the pin in the decoupling direction between the two pieces of the pedal itself, so that the first piece, that most removed from the support of the pedal, is capable of pivoting toward said support, being retracted away from the driver, assisted by a spring, mounted on its hinge and which tends to displace it in such direction.

In this way and as previously said, on the occurrence of a collision of the vehicle with deformation of the area corresponding to the support of whichever of its brake or clutch pedals, said pedal pivots abruptly toward a retracted position which minimises very considerably, making it practically nil, the risk that said pedal ends up striking the driver.

### DESCRIPTION OF THE DRAWINGS

To complete the description that is being made and with the object of assisting in a better understanding of the characteristics of the invention, in accordance with a preferred example of practical embodiment thereof, as an integral part of said description, a set of drawings is attached wherein by way of illustration and not restrictively, the following are shown:
Figure 1. - Shows a schematic representation in side elevation of a control pedal for vehicles in accordance with the object of the present invention, which appears in the normal working situation.
Figure 2. - Shows a similar representation to that of the previous figure, in the moment in which, in the event of a collision, decoupling takes place of the pin that connects the two constituent pieces of the pedal itself.
Figure 3. - Shows, finally and also according to a similar representation to that of the previous figures, the ultimate situation of retraction of the pedal itself.

### PREFERRED EMBODIMENT OF THE INVENTION

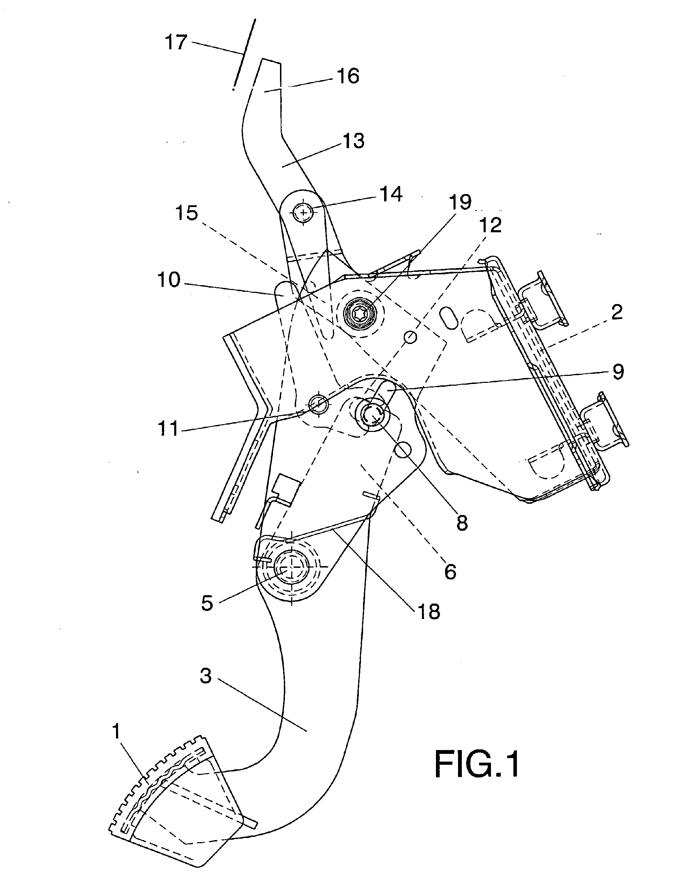

In view of the aforementioned figures it can be observed how the pedal that is proposed, which like any conventional pedal of this type is constituted on the basis of a rest (1) for the driver's foot, and is able to pivot on a support (2) to act through said pivoting on the brake or the clutch of the vehicle, has its characteristics centred on the fact that therein participate, as a lever arm, two pieces (3) and (4), joined to each other through a hinge (5), so that the first piece (3) has its lower front end finished in the rest (1), whilst the second piece (4) is that which is articulated on the support (2), the first one having a noticeable extension (6) in the free end of which a notch (7) is established for coupling to the second piece (4), specifically with the collaboration of a transversal pin (8) that moves in a groove or ripped hole of said second piece (4), so that when the pin (8) is located simultaneously in the groove (9) and in the notch (7), both pieces (3) and (4) are blocked acting as a rigid lever arm, just as is shown in figure 1.

On the second piece (4) a rocker arm (10) is mounted, with the collaboration of a pivot (11) located in its middle region, said rocker arm (10) being finished on its end proximate to the pin (8) in a fork (12) in the body of which said pin (8) moves, whilst the other end of the rocker arm (10) is opposite a cam (13), also pivoting on an intermediate rod (14), one end (15) of which is located immediately behind the aforementioned end of the rocker arm (10), as is shown in figure 1, whilst its other end (16) is opposite a fixed stop (17) of the vehicle structure.

On the hinge (5) of the pieces (3) and (4) a spring (18) is mounted which tends to retract the piece (1) toward the support (2), when the release of said piece (3) takes place with respect to the piece (4) joined to said support (2).

In accordance with this structure, the operation of the pedal is as follows:

In the normal situation of the vehicle the pedal adopts the position shown in figure 1, in which the two pieces (3) and (4) of the lever arm that participates therein are solidly joined to each other through the pin (8), so that acting on the foot rest (1) causes the pivoting of said lever arm about its hinge (19) and the consequent actuation on the connection cable or transmission means.

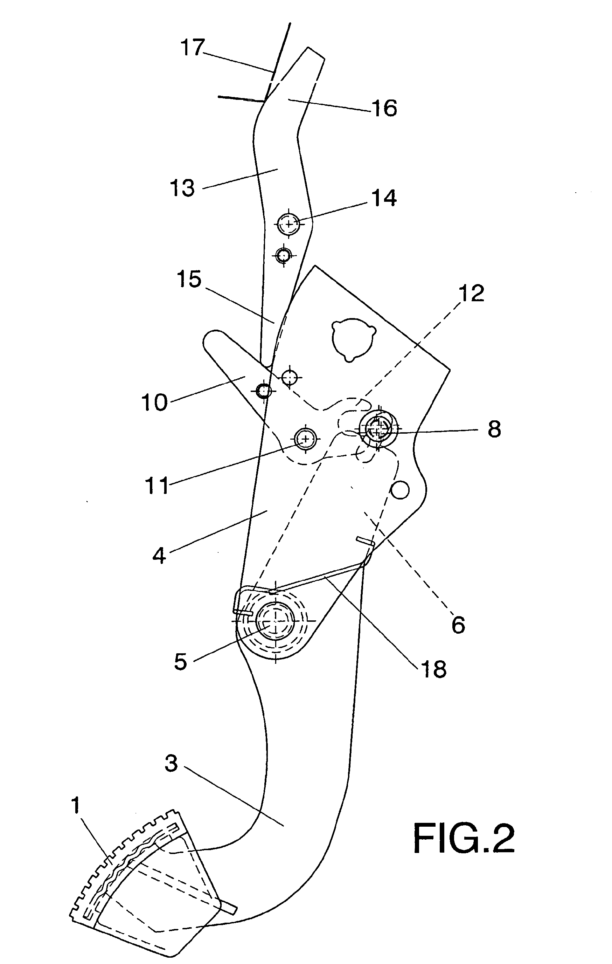

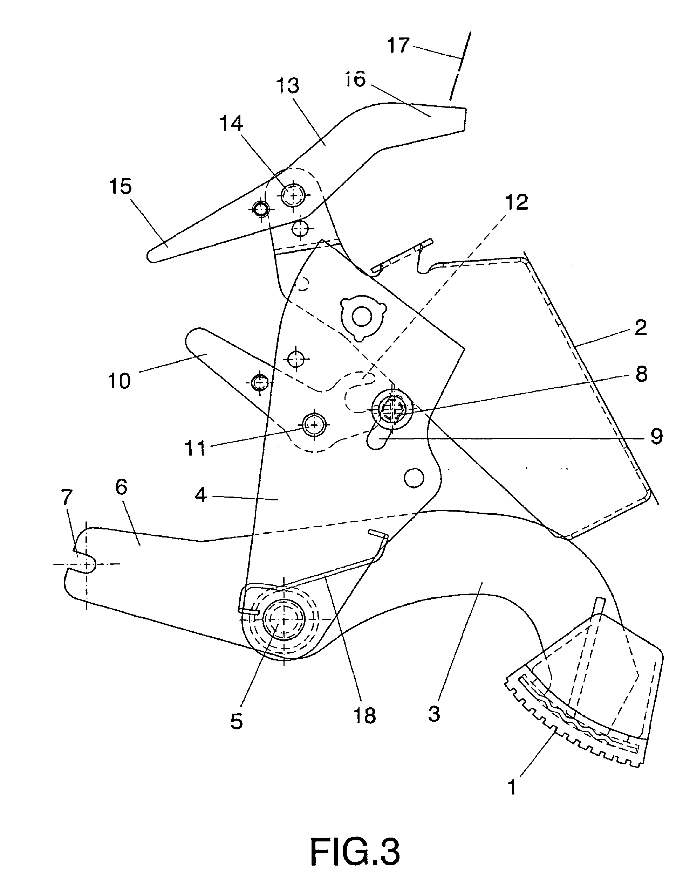

When a violent collision takes place with displacement of the support (2) of the pedal, the end (16) of the cam (13) strikes the fixed stop (17), in association with for example the coachwork of the vehicle and said cam pivots acting through its other end (15) on the rocker arm (10), just as is shown in figure 2, so that the fork (12) of this rocker arm produces a displacement of the pin (8) along the groove (9) toward the position shown in the aforementioned figure 2, position in which said pin abandons the notch (7) of the piece (3), and this last item which was clearly projected toward the driver, pivots through the effect of the spring (18) in the opposite direction, adopting the retracted position shown in figure 3, whereby the risk of impact on the user's legs is markedly minimised, practically removed.

## Claims

1. - Vehicle control pedal, which being indifferently a brake pedal of a clutch pedal, in which a lever arm pivots on a support when it is actuated through a rest fitted on its free end, is **characterised in that** said lever arm is structured by means of two pieces (3) and (4), joined in an articulated manner through a hinge (5), the first terminated on its free end with the classic rest (1) for the user's foot and the second articulated on the support (2), the first piece (3) having an extension (6) opposite to the rest (1), said extension being finished at its free end in a notch (7) for coupling to a transversal pin (8) that moves in a groove or ripped hole (9) of the piece (4) articulated on the support (2), so that under normal conditions the mentioned pin (8) is housed simultaneously in the groove (9) and in the notch (7), constituting a nexus connecting the pieces (3) and (4) that determines the mentioned lever arm, rigid, and the mentioned pin (8) having means for displacement along the groove (9), in the event of a collision of the vehicle of sufficient intensity to produce a deformation or displacement in the support (2) of the pedal, displacement in which said pin (8) abandons the notch (7) of the first piece (3), and the latter pivots toward the support (2), distancing itself from the driver.

2. - Vehicle control pedal, in accordance with claim 1, **characterised in that** the mobilization means for the pin (8) consist of a rocker arm (10), mounted in a hinged manner through an intermediate rod (11) on the second piece (4), that articulated on the support (2), rocker arm (10) finished at one of its ends in a fork (12) in the body of which is inserted in turn the pin (8) and the other end of which is opposite a cam (13), mounted also in a hinged manner on the support (2) through a hinge (14), confrontation that is produced by one of the ends (15) of the aforementioned cam whilst the other end (16) thereof is in turn facing a fixed stop (17) which makes said cam pivot when displacement of the support (2) takes place, which makes the rocker arm (10) in turn pivot causing the displacement of the pin (8) toward the situation of disengagement from the notch (7) of the piece (3) of the lever arm bearer of the rest (1).

3. - Vehicle control pedal, in accordance with previous claims, **characterised in that** on the hinge (5) of the two pieces (3) and (4) constituent parts of the lever arm, a spring (18) is mounted which tends to tilt the piece (3) bearer of the rest (1) toward the support (2) when its release takes place through decoupling of the pin (8) from its notch (7).

## Patentansprüche

1. Fahrzeugsteuerungspedal, das gleichermaßen ein Bremspedal oder ein Kupplungspedal sein kann, in dem sich ein Hebelarm um eine Halterung dreht, wenn er durch eine Auflage, die an seinem freien Ende befestigt ist, betätigt wird, **dadurch gekennzeichnet, dass** der Hebelarm mittels zweier auf drehbare Weise durch ein Gelenk (5) verbundene Teile (3) und (4) strukturiert ist, wobei das Erste an seinem freien Ende mit der herkömmlichen Auflage (1) für den Fuß des Benutzers abschließt und das Zweite an der Halterung (2) angelenkt ist, wobei das erste Teil (3) eine Erweiterung (6) gegenüber der Auflage (1) aufweist, wobei die Erweiterung an ihrem freien Ende in einer Aussparung (7) zur Verbindung an einen transversalen Pin (8) endet, der sich in einer Nut oder länglichen Öffnung (9) des an der Halterung (2) angelenkten Teils (4) bewegt, so dass unter normalen Umständen der genannte Pin (8) gleichzeitig in der Nut (9) und in der Aussparung (7) untergebracht ist, wobei eine Verknüpfung gebildet wird, welche die den Hebelarm festlegenden Teile (3) und (4) starr verbindet und wobei der genannte Pin Mittel zur Verschiebung entlang der Nut (9) in einem Ereignis einer Kollision ausreichender Intensität des Fahrzeugs aufweist, um eine Verformung oder Verschiebung in der Halterung (2) des Pedals zu bewirken, eine Verschiebung, in welcher der Pin (8) die Aussparung (7) des ersten Teils (3) verlässt, und letzteres in Richtung der Halterung (2) dreht, und sich vom Fahrer entfernt.

2. Fahrzeugsteuerungspedal nach Anspruch 1, **dadurch gekennzeichnet, dass** das Aktivierungsmittel für den Pin (8) aus einem Kipphebel (10) besteht, der in einer schwenkbaren Weise durch einen Zwischenstab (11) auf dem an der Halterung (2) angelenkten zweiten Teil (4) angebracht ist, wobei der Kipphebel (10) an einem Ende in einer Gabel (12) endet, in deren Körper wiederum der Pin (8) eingesetzt ist und wobei das andere Ende davon einer Nocke (13) gegenüber liegt, die auch in einer schwenkbaren Weise auf der Halterung (2) durch ein Gelenk (14) angebracht ist, ein Gegenüberstellung, die durch eines der Enden (15) der vorgenannten Nocke erzeugt wird, während das andere Ende (16) davon wiederum einem festen Anschlagstück (17) zugewandt ist, das die Nocke schwenken lässt, wenn eine Verschiebung der Halterung (2) statt findet, was wiederum den Kipphebel (10) schwenken lässt, was eine Verschiebung des Pins (8) in Richtung der Loslösungssituation von der Aussparung (7) des Teils (3) des Hebelarmträgers der Auflage (1) verursacht.

3. Fahrzeugsteuerungspedal nach einem der vorhergehenden Ansprüche, **dadurch gekennzeichnet, dass** an den Bestandteilen, die das Gelenk (5) der zwei Teile (3) und (4) bilden, eine Feder (18) angebracht ist, die darauf abzielt das Teil (3), das ein Träger der Auflage (1) ist, gegen die Halterung (2) zu kippen, wenn seine Loslösung durch Abkoppeln des Pins (8) von seiner Aussparung (7) statt findet.

## Revendications

1. Pédale de commande de véhicule, qui est indifféremment une pédale de frein ou une pédale de débrayage, dans laquelle un bras de levier pivote sur un support lorsqu'il est actionné par un appui ajusté sur son extrémité libre,
**caractérisée en ce que** ledit bras de levier est structuré au moyen de deux pièces (3) et (4), jointes de manière articulée par une articulation (5), la première pièce terminée sur son extrémité libre par l'appui classique (1) pour le pied de l'utilisateur et la seconde pièce articulée sur le support (2), la première pièce (3) ayant une extension (6) opposée à l'appui (1), ladite extension étant terminée à son extrémité libre par un cran (7) pour se coupler à un axe transversal (8) qui se déplace dans une gorge ou un trou fendu (9) de la pièce (4) articulée sur le support (2), de sorte que, dans des conditions normales, l'axe mentionné (8) est logé simultanément dans la gorge (9) et dans le cran (7), constituant une liaison connectant les pièces (3) et (4) qui détermine le bras de levier mentionné, rigide, et l'axe mentionné (8) ayant des moyens de déplacement le long de la gorge (9), dans le cas d'une collision du véhicule d'une intensité suffisante pour produire une déformation ou un déplacement dans le support (2) de la pédale, déplacement dans lequel ledit axe (8) quitte le cran (7) de la première pièce (3), et celle-ci pivote vers le support (2), se distançant du conducteur.

2. Pédale de commande de véhicule, selon la revendication 1,
**caractérisée en ce que** les moyens de mobilisation pour l'axe (8) consistent en un bras oscillant (10), monté de manière basculante par une tige intermédiaire (11) sur la seconde pièce (4), qui est articulée sur le support (2), le bras oscillant (10) étant terminé à l'une de ses extrémités en une fourche (12) dans le corps de laquelle est inséré à son tour l'axe (8) et à l'autre extrémité auquel est opposée une came (13), montée également de manière articulée sur le support (2) par une articulation (14), confrontation qui est produite par l'une des extrémités (15) de la came sus-mentionnée tandis que l'autre extrémité (16) de celle-ci est à son tour mise en face d'un arrêt fixé (17) qui fait pivoter ladite came lorsque le déplacement du support (2) a lieu, ce qui fait pivoter à son tour le bras oscillant (10) entraînant le déplacement de l'axe (8) vers la situation de désengagement du cran (7) de la pièce (3) du bras de levier porteur de l'appui (1).

3. Pédale de commande de véhicule, selon les revendications précédentes,
**caractérisée en ce que** sur l'articulation (5) des deux pièces (3) et (4) parties constituantes du bras de levier, est monté un ressort (18) qui tend à incliner la pièce (3) porteuse de l'appui (1) vers le support (2) lorsque son relâchement a lieu par découplage de l'axe (8) de son cran (7).
